# EUROPÄISCHE PATENTSCHRIFT

(11) **EP 3 716 453 B1**
(45) Veröffentlichungstag und Bekanntmachung des Hinweises auf die Patenterteilung: **19.06.2024**
(21) Anmeldenummer: 20157092.6
(22) Anmeldetag: 13.02.2020
(51) Int. Cl.: H02K 11/25, H02K 15/085, H02K 3/12

(54) **HERSTELLUNGSVERFAHREN EINES BAUTEILS UND BAUTEIL EINER ELEKTRISCHEN MASCHINE**
MANUFACTURING METHOD OF A COMPONENT AND COMPONENT OF AN ELECTIC MASCHINE
PROCÉDÉ DE FABRICATION D'UN COMPOSANT ET COMPOSANT D'UN MACHINE ELECTRIQUE

(30) Priorität: 25.03.2019 DE 102019204002
(43) Veröffentlichungstag der Anmeldung: 30.09.2020
(73) Patentinhaber: Audi AG, 85045 Ingolstadt (DE)
(72) Erfinder: Weber, Korbinian, 85049 Ingolstadt (DE); Breuer, Thomas, 85051 Ingolstadt (DE)

(56) Entgegenhaltungen:
- EP-A1- 3 190 689
- JP-A- H04 317 543
- JP-A- 2011 112 563
- JP-A- 2016 214 011
- US-A1- 2015 295 477

## Beschreibung

Die Erfindung betrifft ein Verfahren zum Herstellen eines Bauteils für eine Elektromaschine und ein Bauteil für eine Elektromaschine.

Ein Stator für eine Elektromaschine weist mehrere Spulen auf, deren Temperatur mit einem Temperatur-Messelement gemessen werden kann.

Ein als Antriebsmaschine eines Kraftfahrzeugs einsetzbarer Elektromotor ist aus der Druckschrift DE 10 2016 214 029 A1 bekannt.

Die Druckschrift DE 10 2013 208 200 A1 beschreibt ein Verfahren und eine Vorrichtung zur Herstellung einer elektrischen Maschine.

Ein Elektromotor und Verfahren zur Herstellung eines derartigen Elektromotors sind in der Druckschrift DE 10 2017 203 788 A1 beschrieben.

Die Druckschrift JP 2011/112563 A beschreibt einen Temperatursensor und eine dynamoelektrische Maschine. Dabei ist jeweils ein Thermistor an einem länglichen Abschnitt jeweils eines Drahts angeordnet. Weiterhin ist hier ein derartiger Thermistor auch innerhalb eines jeweiligen Drahts angeordnet.

Eine elektrische rotierende Maschine ist in der Druckschrift US 2015/0295477 A1 beschrieben. Dabei ist hier lediglich eine Lage von U-förmigen Leitersegmenten oder von schrägförmigen Leitersegmenten gezeigt, die alle denselben Abstand zu einer Achse der Rotationsmaschine aufweisen. Diese Leitersegmente bilden eine Spule, an deren Ende ein Thermistor angeordnet ist.

Eine isolierende Befestigung eines Sensors an einem Kühlmotor eines Kühlschranks ist aus der Druckschrift JP H04/317543 A bekannt.

Die Druckschrift JP 2016/214011 A beschreibt einen Stator einer Rotationsmaschine mit einem Temperaturdetektionselement.

Die Druckschrift EP 3 190 689 A1 beschreibt einen Stator für eine elektrisch umlaufende Maschine. Dieser Stator umfasst wenigstens einen Temperaturmessfühler, der wenigstens ein Sensorelement umfasst, das so angeordnet ist, dass es sich in Kontakt mit wenigstens einem elektrischen Leiter der Wicklung befindet, um die Temperatur der Wicklung zu messen. Dabei erstreckt sich der Messfühler in einem Wicklungskopf der elektrischen Wicklung, wobei er an einem Ende eines elektrischen Leiters angeordnet ist, wobei das Sensorelement in einer Beschichtung eingekapselt ist, wobei die Beschichtung auch eine Verbindungsstelle zwischen zwei elektrischen Leitern umhüllt.

Vor diesem Hintergrund war es eine Aufgabe, einen Temperatursensor an einer Spule einer Elektromaschine günstig zu positionieren.

Diese Aufgabe wird durch ein Verfahren und ein Bauteil mit den Merkmalen der unabhängigen Patentansprüche gelöst. Ausführungsformen des Verfahrens und des Bauteils gehen aus den abhängigen Patentansprüchen hervor.

Das erfindungsgemäße Verfahren ist zum Herstellen eines Bauteils für eine Elektromaschine aus einem Blechpaket, das mehrere Nuten und eine zentrale Achse aufweist, und einer Vielzahl an bspw. U-förmigen Drahtelementen vorgesehen, wobei jedes Drahtelement zwei Schenkel aus Draht aufweist, die über eine Biegung aus Draht miteinander verbunden sind bzw. verbunden werden. Dabei werden zumindest die Schenkel der Drahtelemente parallel zu der Achse in den Nuten angeordnet, wobei die Biegungen üblicherweise axial versetzt außerhalb der Nuten angeordnet werden. Weiterhin wird an einer Spitze der Biegung mindestens eines Drahtelements ein Temperatursensor befestigt. Außerdem werden die Biegungen der Vielzahl an Drahtelementen in mehreren bspw. ringförmigen Lagen relativ zu der Achse des Blechpakets angeordnet, wobei eine Biegung aus bzw. in jeweils einer Lage einen lageabhängigen Abstand zu der Achse des Blechpakets aufweist. Eine Biegung des mindestens einen Drahtelements, die zum Befestigen des Temperatursensors vorgesehen und/oder ausgewählt wird bzw. ist, wird bzw. ist in einer mittleren Lage angeordnet, die im Vergleich zu sämtlichen Biegungen sämtlicher Drahtelemente zu der Achse des Blechpakets einen mittleren bzw. durchschnittlichen Abstand aufweist. Falls zunächst die Schenkel sämtlicher Drahtelemente in den Nuten des Blechpakets angeordnet werden, wird nachfolgend mindestens eine Biegung in der mittleren Lage ausgewählt, an der der Temperatursensor angeordnet wird. Falls alternativ an der Biegung des mindestens einen Drahtelements der Temperatursensor angeordnet wird, bevor die Schenkel sämtlicher Drahtelemente in den Nuten angeordnet werden, wird die Biegung des mindestens einen Drahtelements, an der bereits der Temperatursensor befestigt ist, beim Einlegen bzw. Anordnen der Schenkel sämtlicher Drahtelemente in der hierfür vorgesehenen mittleren Lage mit dem mittleren Abstand zu der Achse angeordnet. Außerdem wird eine Biegung mindestens eines Drahtelements derart verformt, dass eine Spitze herstellt wird, wobei zusätzlich diese Biegung von außen zugänglich ist. Anschließend wird an der Spitze der von außen zugänglichen Biegung des mindestens einen Drahtelements ein Temperatursensor montiert und befestigt wird.

Üblicherweise wird zumindest ein Drahtelement aus einem Abschnitt Draht hergestellt, der bspw. in der Mitte gebogen wird, wobei die Biegung und die beiden Schenkel durch Biegen des einen Abschnitts aus Draht hergestellt bzw. gebildet werden.

Alternativ oder ergänzend kann zumindest ein Drahtelement aus zwei Abschnitten aus Draht bzw. zwei Teil-Drahtelementen, bspw. zwei einzelnen Schenkeln, die je nach Definition bspw. S-förmig oder J-förmig ausgebildet sind, hergestellt werden, wobei diese beiden Drahtelemente miteinander verbunden werden, wobei die Biegung durch Verbinden der zwei Teil-Drahtelemente bzw. Abschnitte aus Draht gebildet bzw. hergestellt wird.

Dabei können die beiden Teil-Drahtelemente miteinander verschweißt werden, wobei die Teil-Drahtelemente hierbei bspw. über einen Schweißpunkt als mindestens ein Verbindungsglied miteinander verbunden werden. Es ist möglich, die beiden Teil-Drahtelemente miteinander zu verbinden, nachdem deren Schenkel in mindestens einer Nut angeordnet worden sind oder bevor die Schenkel in der mindestens einen Nut angeordnet werden.

In Ausgestaltung kann der Temperatursensor bei einem Verbinden der zwei Teil-Drahtelemente zu dem zumindest einen bzw. mindestens einen Drahtelement in das zumindest eine bzw. mindestens eine Drahtelement, bspw. in die dabei herzustellende und/oder hergestellte Biegung zum Verbinden der Teil-Drahtelemente aus Draht, eingebunden werden. Dies ist möglich, nachdem die Schenkel in der mindestens einen Nut angeordnet worden sind oder bevor die Schenkel in der mindestens einen Nut angeordnet werden.

Demnach sind zwei Maßnahmen zum Herstellen jeweils eines Drahtelements durchführbar. Üblicherweise wird Draht, der aus einem leitfähigen Metall, bspw. Kupfer, besteht, als Meterware bereitgestellt. Dabei kann der Draht einen eckigen, insbesondere viereckigen, oder einen runden Querschnitt aufweisen und ggf. mit Isoliermaterial umhüllt sein. In beiden Fällen werden von dem Draht Abschnitte abgeschnitten, bspw. abgelängt, die eine jeweils vorgesehene Länge aufweisen. Im ersten Fall wird jeweils ein Abschnitt aus Draht gebogen und somit ein Drahtelement hergestellt. Im zweiten Fall werden zwei einzelne Teil-Drahtelemente, nachdem sie von der Meterware aus Draht abgeschnitten worden sind, an jeweils einem Ende verformt, wobei ein jeweiliges verformtes Ende eine halbe Biegung des aus den beiden Abschnitten herzustellenden Drahtelements bildet. Die beiden gebogenen Abschnitte bzw. Teil-Drahtelemente werden an den jeweils bereitgestellten halben Biegungen bspw. durch Schweißen miteinander verbunden.

In Ausgestaltung werden die Schenkel des mindestens einen Drahtelements zuerst in der mindestens einen Nut angeordnet, wobei der Temperatursensor danach an der Biegung des mindestens einen Drahtelements angeordnet und befestigt wird. Alternativ hierzu wird der Temperatursensor zuerst an der Biegung des mindestens einen Drahtelements angeordnet und befestigt, wobei erst danach die Schenkel des mindestens einen Drahtelements, an dessen Biegung der Temperatursensor befestigt ist, in der mindestens einen Nut angeordnet werden. Unabhängig von einer jeweils vorgesehenen Reihenfolge werden die Schenkel im Rahmen üblicher Fertigungstoleranzen in den Nuten zumindest weitgehend parallel zu der Achse des Blechpakets orientiert.

Falls die Biegung des mindestens einen Drahtelements mit Isoliermaterial bzw. einer Isolierung umhüllt ist, kann diese entfernt werden, bevor der Temperatursensor daran befestigt wird.

In weiterer Ausgestaltung wird der mindestens eine Temperatursensor an einem Wickelkopf bzw. einer Biegeseite für das Bauteil der Elektromaschine angeordnet und/oder befestigt.

Weiterhin werden offene Enden der jeweils zwei Schenkel eines Drahtelements, die der Biegung gegenüberliegen, ebenfalls axial außerhalb der Nuten angeordnet, wobei sich auf bzw. an der Biegeseite die Biegungen sämtlicher Drahtelemente befinden. Somit ergibt sich, dass an einer ersten axialen Öffnung einer jeweiligen Nut außerhalb dieser Nut auf der Biegeseite Biegungen und an einer zweiten axialen Öffnung einer jeweiligen Nut außerhalb dieser Nut Enden von Schenkeln der Drahtelemente angeordnet werden, wobei diese beiden Öffnungen axial versetzt sind. Ergänzend werden die offenen Enden der Schenkel, bspw. von mindestens zwei Schenkeln unterschiedlicher Drahtelemente, an der zweiten axialen Öffnung, verformt, bspw. verdreht bzw. getwistet und miteinander verschweißt. Ferner wird hier aus einer Vielzahl an Drahtelementen, deren offene Enden der Schenkel durch Schweißen miteinander verbunden werden, eine Wicklung bzw. Spule bereitgestellt.

Das erfindungsgemäße Bauteil ist für eine Elektromaschine ausgebildet und weist eine Vielzahl an bspw. U-förmigen Drahtelementen auf. Dabei weist das Blechpaket mehrere Nuten und eine zentrale Achse auf, wobei jedes Drahtelement zwei Schenkel aus Draht aufweist, die über eine Biegung aus Draht miteinander verbunden sind bzw. verbunden werden. Dabei sind zumindest die Schenkel der Drahtelemente parallel zu der Achse in den Nuten angeordnet, wobei die Biegungen axial versetzt außerhalb der Nuten angeordnet sind, wobei an einer Spitze der Biegung mindestens eines Drahtelements ein Temperatursensor befestigt ist.

Das Bauteil bspw. ist als Stator oder alternativ als Rotor der Elektromaschine ausgebildet.

Weiterhin weist zumindest ein Drahtelement bzw. zumindest ein Draht einen viereckigen, bspw. rechteckigen oder quadratischen Querschnitt auf.

Mit dem Verfahren ist eine Platzierung eines Temperatursensors bzw. eines Thermosensors an einen Hairpin- bzw. Haarnadel-Stator möglich. Hierbei wird in Ausgestaltung ein Hairpin-Drahtelement bzw. ein Sonder-Hairpin-Drahtelement mit einer ausgestellten Anbindungsfläche auf der Biegeseite in einer thermisch direkt an den Wickelkopf angebundenen Position, z. B. in einer mittleren Wickellage, als Position für den Temperatursensor und als Messpunkt für die Temperatur an der Biegung des mindestens einen Drahtelements eingebracht. Eine Spule des Stators umfasst eine Vielzahl an geöffneten Drahtelementen, die zu der Spule verbunden sind bzw. werden, wobei diese jeweils als Haarnadel bzw. haarnadelförmig ausgebildet sind und/oder bezeichnet werden. Die bspw. haarnadelförmigen Drahtelemente werden in einem Hairpin-Formdraht-Wickelverfahren hergestellt und/oder bearbeitet, wobei aus den Drahtelementen die Spule hergestellt wird. Weiterhin wird der Temperatur- bzw. Thermosensor bzw. ein Thermoelement außen am Wickelkopf positioniert. Das mindestens eine Drahtelement ist bspw. U-förmig ausgebildet bzw. geformt. Dabei wird der Temperatursensor an einem zentralen Anbindungspunkt an der Biegung des mindestens einen Drahtelements angeordnet. Alternativ oder ergänzend wird der Temperatursensor an einem Schweißpunkt, der zwei Teil-Drahtelemente an der Biegung verbindet, angeordnet.

Ein in Ausgestaltung des Verfahrens hergestellter Stator für die elektrische Maschine bzw. Elektromaschine wird aus mehreren Drahtelementen in Hairpin-Bauweise hergestellt und ist für eine als automotive Antriebsmaschine ausgebildete elektrische Maschine vorgesehen. Bei dieser Fertigungstechnik wird ein im Profil bspw. rechteckiger Draht zunächst in eine U-Form bzw. Hairpin-förmig gebogen. Die Schenkel mehrerer derartiger Hairpin-förmiger Drahtelemente werden anschließend kreisförmig angeordnet und in die Nuten des Blechpakets des herzustellenden Stators eingesetzt. Alle offenen Enden der Schenkel bzw. alle offenen Pin-Enden bzw. offenen Enden aller Drahtelemente auf einer Rückseite des Stators werden in einem nächsten Schritt konzentrisch zu der Achse des herzustellenden Stators bzw. des Blechpakets um einen definierten Winkel verdreht. Dabei werden alle Enden von Drahtelementen, die auf einem Durchmesser bzw. einer Lage liegen und denselben Abstand zu der zentralen Achse des Stators aufweisen, abwechselnd im Uhrzeigersinn und entgegen dem Uhrzeigersinn verdreht. Dieser Vorgang bzw. Schritt wird als Twisten bzw. Verdrehen bezeichnet. Daraufhin werden alle Paare von Enden der Schenkel von Drahtelementen, die nach dem Twisten mit demselben Abstand zu der Achse in einer Lage üblicherweise unmittelbar benachbart nebeneinander zum Liegen kommen, miteinander verschweißt. Je nach Wickelschema werden sogenannte Verschaltbrücken auf den Wickelkopf aufgesetzt und mit den Enden der Drahtelemente verschweißt, um die Hairpins zu einer Gesamtwicklung bzw. einer Gesamtspule zu verschalten. Ergänzend ist es ggf. möglich, dass die Enden der Drahtelemente isoliert werden und der gesamte Stator imprägniert wird.

Dieser derartig hergestellte Stator wird bspw. für einen Elektromotor im Automobilbereich eingesetzt, wobei das beschriebene Verfahren in hohem Grad automatisierbar ist bzw. automatisiert durchgeführt wird. Dabei wird ein hoher Kupferfüllfaktor, der ein Verhältnis einer Kupferfläche, üblicherweise einer Kupferfläche sämtlicher Drahtelemente bzw. der Spule bzw. Wicklung, zu einer Nutfläche jeweils einer Nut beschreibt, in der jeweiligen Nut des Stators erreicht.

Bei dem Verfahren können in Ausgestaltung zum Herstellen des Stators auch halbe Hairpins bzw. S-Pins und somit halbe U-förmige bzw. S-förmige bzw. J-förmige Teil-Drahtelemente verwendet werden. Durch Einsatz bzw. Verwendung derart geformter Teil-Drahtelemente werden Verschaltelemente, wie bspw. Phasenanschlüsse und/oder ein Sternpunkt des Stators von einem getwisteten und geschweißten Wickelkopf, der die verschweißten Enden der Drahtelemente umfasst, auf einer ersten Seite des Stators auf einen gebogenen Wickelkopf, der die Biegungen der Drahtelemente und den mindestens einen Temperatursensor umfasst, auf einer anderen zweiten Seite des Stators verschoben.

Mit dem mindestens einen im Rahmen des Verfahrens in das Bauteil integrierten Temperatursensor wird im Betrieb des bspw. als Stator ausgebildeten Bauteils eine Temperatur der Wicklung bzw. Spule überwacht.

Beim Stand der Technik war es üblich, diesen Temperatursensor bspw. bei einem Formdraht-Stator üblicherweise an einzelnen Leitern oder an Verschaltelementen wie dem Sternpunkt anzubinden. Weiterhin wurde ein kurzes Formdrahtstück als dritter Leiter an ein zur Verschaltung erforderliches verschweißtes Pinpaar thermisch leitend angebunden und aus dem Wickelkopf herausgeführt.

Die im Rahmen des Verfahrens vorgesehene Position des mindestens einen Temperatursensors an einer Biegung eines Drahtelements ist für eine Regelung der elektrischen Maschine entscheidend. In Ausgestaltung des Verfahrens wird vermieden, dass der Temperatursensor an einer exponierten Stelle, bspw. an einer äußersten Wicklung, gänzlich außerhalb des Wickelkopfes oder an einer größeren Wärmesenke, z. B. einem Sternpunkt-Verbinder, platziert wird. Dabei wird weiterhin vermieden, dass ein von einem jeweiligen Temperatursensor gemessener Wert der Temperatur abhängig von einer Kühlung der Wickelköpfe im Vergleich zum Rest der Wicklung verfälscht wird.

Unpraktischerweise stehen die obengenannten bzw. gestellten Anforderungen bzgl. guter thermischer Anbindung des Sensors an die Wicklungstemperatur beim Stand der Technik im Gegensatz zu einer guten Zugänglichkeit, Tauschbarkeit und/oder Montierbarkeit von TemperaturSensoren.

Diese produktionsseitigen Aspekte zum Befestigen eines Temperatursensors an einer exponierten Stelle und an einem Verschaltelement des Stators. sowie eine gute thermische Anbindung des Temperatursensors an die Wicklungstemperatur sind durch das Verfahren gegeben.

Mit dem Verfahren kann eine Vielzahl an Statoren in einer Großserienproduktion mit Temperatursensoren ausgestattet werden. Dabei wird eine gute Montierbarkeit, Zugänglichkeit und Tauschbarkeit bei einer Platzierung des Temperatursensors erreicht.

Bei einer ersten beispielhaften Ausführungsform des Verfahrens wird das Drahtelement aus zwei Teil-Drahtelementen, bspw. zwei S-förmigen Hairpins, hergestellt, die an einem Schweißpunkt miteinander verbunden werden, wobei auch eine Biegung hergestellt wird, die die beiden Teil-Drahtelemente miteinander verbindet. Dabei ist es möglich, dass jedes Teil-Drahtelement eine Teil-Biegung aufweist, wobei durch Verbinden der beiden Teil-Biegungen der beiden Teil-Drahtelemente erst das Drahtelement und auch die Biegung des Drahtelements gebildet wird. Dann werden die Schenkel dieses aus zwei Teil-Drahtelementen hergestellten Drahtelements in mindestens einer Nut eines Blechpakets eingebracht bzw. angeordnet. Anschließend wird an der außerhalb der Nut befindlichen Biegung nahe an dem Schweißpunkt der Temperatursensor angebracht, wobei eine eventuell vorhandene Isolation an den Teil-Drahtelementen und/oder dem Drahtelement bei einer Fertigung im Bereich des vorgesehenen Schweißpunkts entfernt wird. Die beiden Teil-Drahtelemente können über den Schweißpunkt bevor deren zwei Schenkel in der mindestens einen Nut angeordnet worden sind oder nachdem die Schenkel in der mindestens einen Nut angeordnet worden sind, verbunden werden.

Bei dem Verfahrens wird ein bereits komplett gebogenes Drahtelement bzw. ein kompletter bspw. U-förmiger Hairpin bereitgestellt, wobei an der Biegung dieses Drahtelements, die die beiden Schenkel des Drahtelements verbindet, zusätzlich eine Spitze anzuformen, bspw. auszustellen, ist und der Temperatursensor anschließend an und/oder auf der ggf. abisolierten Spitze des Drahtelements anzubringen und zu befestigen ist.

Bei sämtlichen Ausführungsformen des Verfahrens ist es möglich, dass der Temperatursensor direkt an einer Fläche, die axial an einem Wickelkopf des herzustellenden Bauteils angebunden wird, anzubringen, bspw. zu befestigen. Die mindestens eine Biegung, an der der Temperatursensor auf der Biegeseite angeordnet wird, ist von außen gut zugänglich, wodurch der Temperatursensor gut montiert werden kann. Bei dieser Biegung handelt es sich um ein kurzes, aber verhältnismäßig steifes und frei zugängliches Element des herzustellenden Bauteils, wobei es möglich ist, dass der Temperatursensor an der Biegung axial, tangential oder radial zur Motorachse bzw. zur Achse des Blechpakets aufgebracht wird. Insbesondere bei einem als Stator ausgebildeten Bauteil, bei dem bspw. gebogene Drahtelemente oder S-förmige Teil-Drahtelemente verwendet werden, ist es möglich, den mindestens einen Temperatursensor auf der Biegeseite der Drahtelemente anzuordnen bzw. unterzubringen, an der sich die Biegungen sämtlicher Drahtelemente befinden, da es auf dieser Biegeseite möglich ist, eine Leitung bzw. ein Kabel für den Temperatursensor zusammen mit ferner vorgesehenen Phasenanschlüssen zu verlegen und/oder zu montieren. Diese Biegeseite ist besser zugänglich als die von der Biegeseite axial abgewandte Seite, an der sich Enden der Schenkel der Drahtelemente befinden, die zum Herstellen der Wicklung verdreht und verschweißt werden.

Der mindestens eine Temperatursensor ist in der Wicklung aus der Vielzahl von Drahtelementen an der Biegung des mindestens einen Drahtelements frei platzierbar, wobei sich dieses mindestens eine Drahtelement, an dessen Biegung der Temperatursensor befestigt ist, ansonsten wie ein reguläres Drahtelement verhält. Falls die Biegung zunächst noch isoliert ist, wird eine Isolierung entfernt bzw. abisoliert und der Temperatursensor auf der blanken bzw. abisolierten Biegung befestigt, wobei der Sensor und ein eventuell noch blanker Abschnitt der Biegung dennoch mit einer Isolierung beschichtet werden. Außerdem ist es möglich, auf Abdeckungen und Maskierungen beim Isolieren, in der Regel bei einem Tauchprozess, der blanken, d. h. abisolierten Drahtelemente auf einer Schweißseite zu verzichten.

Beim Anordnen der Schenkel der Drahtelemente in den Nuten des Blechpakets werden viele Lagen bzw. Schichten aus Biegungen gebildet, die jeweils einen lageabhängigen Abstand zu der Achse des Blechpakets aufweisen. Bei einer Ausführungsform des Verfahrens wird eine Biegung des mindestens einen Drahtelements ausgewählt, die im Vergleich zu den Biegungen der anderen Drahtelemente in einer mittleren Reihe bzw. einer mittleren Lage mit einem mittleren Abstand zu der Achse liegt, an der der Temperatursensor befestigt wird. Weiterhin ist möglich, dass die Biegungen der Drahtelemente nach außen, d. h. außerhalb der Nuten wenig exponiert sind. Außerdem weicht eine Temperatur, die von dem mindestens einen Temperatursensor an der Biegung des mindestens einen Drahtelements gemessen wird, von der Temperatur der restlichen Wicklung nur geringfügig ab. Der jeweilige Temperatursensor kann direkt auf blankem Leitermaterial, bspw. Kupfer, des jeweiligen Drahtelements befestigt werden, was bspw. auch dann möglich ist, wenn dieses Drahtelement aus zwei abisolierten S-förmigen Teil-Drahtelementen hergestellt wird. In diesem Fall wird der Temperatursensor an einer Schweißstelle an der Biegung, die die Teil-Drahtelemente bzw. die daraus gebildeten Schenkel des Drahtelements verbindet, befestigt. In der Regel kann der Temperatursensor an der Wicklung thermisch gut angebunden werden. Dabei ist es möglich, etwaige Abstände zu einem Rest der Wicklung, bspw. unter Berücksichtigung von Luft- und Kriechstrecken, gut einzustellen und/oder zu kontrollieren.

Durch die im Rahmen des Verfahrens vorgesehene Anordnung des Temperatursensors kann der Wert der Temperatur genauer gemessen werden und wird im Vergleich zu anderen Anordnungen nicht stark verfälscht.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 veranschaulicht in schematischer Darstellung Schritte zur Herstellung einer ersten Ausführungsform des erfindungsgemäßen Bauteils unter Nutzung eines ersten Beispiels für ein Drahtelement bei Durchführung einer ersten Ausführungsform des erfindungsgemäßen Verfahrens.
Figur 2 zeigt Details eines zweiten Beispiels eines Drahtelements, das bei Durchführung einer zweiten Ausführungsform des erfindungsgemäßen Verfahrens verwendet wird.
Figur 3 zeigt Details eines dritten Beispiels eines Drahtelements beim Durchführen einer dritten Ausführungsform des erfindungsgemäßen Verfahrens.
Figur 4 zeigt in schematischer Darstellung Details eines vierten Beispiels eines Drahtelements zum Durchführen einer vierten Ausführungsform des erfindungsgemäßen Verfahrens.
Figur 5 zeigt in schematischer Darstellung Details einer Ausführungsform des erfindungsgemäßen Bauteils, das durch Durchführen einer fünften Ausführungsform des erfindungsgemäßen Verfahrens hergestellt worden ist.

Die Figuren werden zusammenhängend und übergreifend beschrieben, gleichen Komponenten sind dieselben Bezugsziffern zugeordnet.

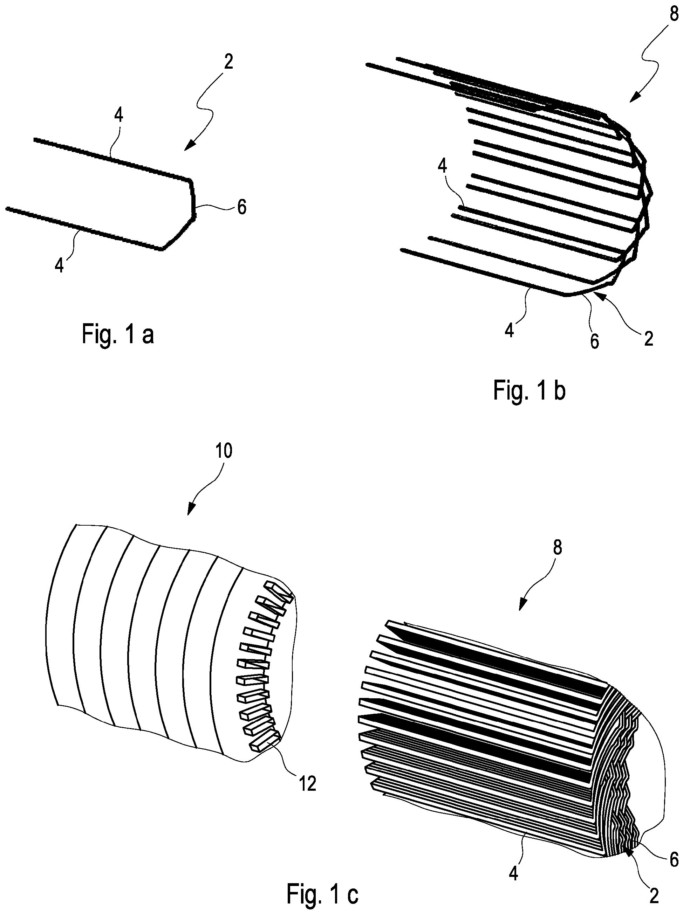

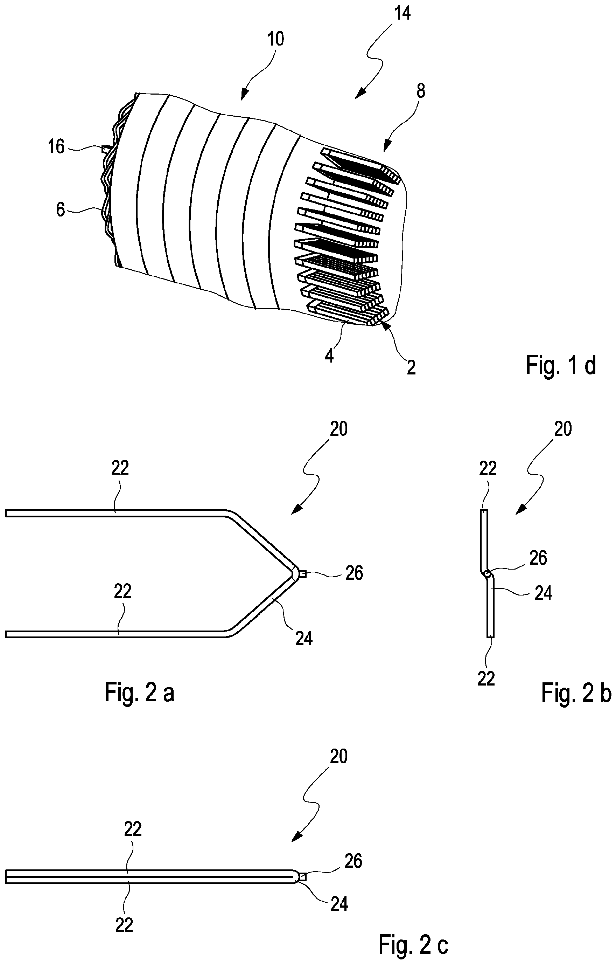

Figur 1a zeigt das erste Beispiel für ein Drahtelement 2, das neben einer Vielzahl weiterer Drahtelemente 2, wie sie bspw. in Figur 1b gezeigt sind, bei Durchführung der ersten Ausführungsform des erfindungsgemäßen Verfahrens zum Herstellen der ersten Ausführungsform des in Figur 1d teilweise schematisch dargestellten erfindungsgemäßen Bauteils 14 verwendet wird. Jedes Drahtelement 2 umfasst zwei Schenkel 4, die über eine Biegung 6 miteinander verbunden sind. Bei der hier vorgestellten Ausführungsform wird zum Herstellen des Drahtelements 2 ein Abschnitt aus Draht bereitgestellt und gebogen, wobei die Biegung 6 gebildet wird, und wobei die beiden Schenkel 4 im Rahmen üblicher Fertigungstoleranzen zueinander weitgehend parallel angeordnet werden. Weiterhin wird aus mehreren derartig gebogener, je nach Definition bspw. U-förmiger Drahtelemente ein Korb 8 hergestellt. Dabei ist ein Teil eines derartigen Korbs 8, während dieser zusammengesetzt wird und bislang nur wenige Drahtelemente 2 umfasst, in Figur 1b gezeigt. Figur 1c zeigt dagegen einen Ausschnitt eines vollständigen Korbs 8 mit der vorgesehenen kompletten Anzahl bzw. Vielzahl an Drahtelementen 2. Dabei sind bei der Darstellung in Figur 1c im Unterschied zu der Darstellung von Figur 1a offene Enden der Schenkel 4 der Drahtelemente 2 einem Betrachter zugewandt, wohingegen die Biegungen 6 von dem Betrachter abgewandt sind. Figur 1c zeigt weiterhin einen Ausschnitt eines Blechpakets 10, das hier eine zentrale Achse aufweist. Dabei weist das hier im Rahmen üblicher Fertigungstoleranzen weitgehend rohrförmige bzw. hohlzylinderförmige Blechpaket hier an einer Innenwand mehrere axial orientierte Nuten 12 auf, wobei die Schenkel 4 der Drahtelemente 2 axial zu der Achse des Blechpakets 10 in dessen Nuten 12 angeordnet werden. Dabei ergibt sich, wie Figur 1d zeigt, dass einerseits sämtliche Biegungen 6 und Enden sämtlicher Schenkel 4 außerhalb der Nuten 12 angeordnet werden. Unabhängig von der hier vorgestellten ersten Ausführungsform des Verfahrens ist weiterhin vorgesehen, dass Enden zweier Schenkel 4 von jeweils zwei Drahtelementen 2, die nach Einführen des Korbs 8 in das Blechpaket 10 zu der Achse des Blechpakets 10 denselben Abstand aufweisen, miteinander verdreht und durch Schweißen miteinander verbunden werden, wobei aus der Vielzahl an Drahtelementen 2 eine Spule bzw. eine Wicklung der herzustellenden Ausführungsform des hier als Stator ausgebildeten Bauteils 14 gebildet wird.

Bei der ersten Ausführungsform des Verfahrens wird an einer Biegung 6 von mindestens einem Drahtelement 2, die sich außerhalb der Nuten 12 befindet, ein Temperatursensor 16 befestigt, der bei einem Betrieb der Elektromaschine dazu ausgebildet ist, die Temperatur der aus den Drahtelementen 2 gebildeten Spule des Bauteils 14 zu messen.

Das zweite Beispiel des Drahtelements 20 ist in Figur 2a von oben in Draufsicht, in Figur 2b von vorne in Vorderansicht und in Figur 2c in Seitenansicht jeweils schematisch dargestellt. Zum Herstellen dieses auch als Standardpin zu bezeichnenden Drahtelements 20 wird von einem Draht, bspw. einem Kupferdraht, ein Abschnitt abgeschnitten und gebogen. Dabei werden aus diesem ursprünglichen Draht zwei Schenkel 22 gebildet, die im Rahmen üblicher Fertigungstoleranzen zueinander weitgehend parallel angeordnet und über eine ebenfalls aus dem ursprünglichen Draht gebildeten Biegung 24 miteinander verbunden werden. Bei der zweiten Ausführungsform des erfindungsgemäßen Verfahrens werden Schenkel 22 einer Vielzahl derartiger Drahtelemente 20 in axialen Nuten eines Blechpakets angeordnet, wie es bspw. anhand von Figur 1 schematisch dargestellt ist. Dabei ist vorgesehen, dass die Biegungen 24 der Drahtelemente 20 außerhalb der Nuten des Blechpakets angeordnet werden. An der Biegung 24 mindestens eines dieser Drahtelemente 20 wird weiterhin ein Temperatursensor 26 angeordnet.

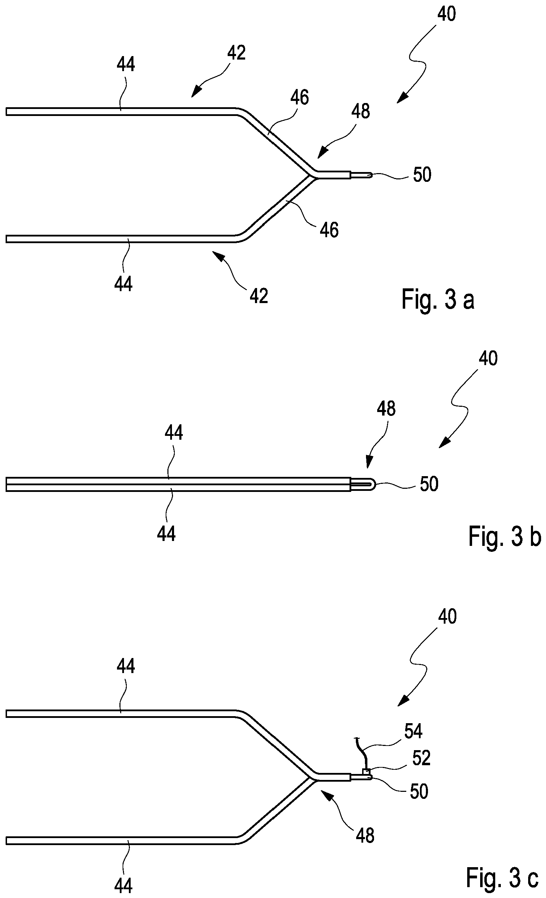

Das dritte Beispiel für das Drahtelement 40 ist anhand der Figuren 3a, 3b, 3c schematisch dargestellt, wobei dieses dritte Beispiel für das Drahtelement 40 aus zwei Teil-Drahtelementen 42 hergestellt wird. Dabei wird jedes einzelne Teil-Drahtelement 42 aus einem Abschnitt von Draht gebildet, wobei dieser Abschnitt des Drahts bzw. das jeweilige Teil-Drahtelement 42 gebogen wird, wobei das jeweilige Teil-Drahtelement 42 einen geraden Schenkel 44 und eine Halb-Biegung bzw. Teil-Biegung 46 aufweist, wobei jedes derartige Teil-Drahtelement 42 je nach Definition J-förmig bzw. S-förmig ist. Hierbei ist vorgesehen, dass an Enden der Teil-Biegungen 46 befindliches Isoliermaterial, das die jeweiligen Teil-Biegungen 46 aus Draht umhüllt, abisoliert wird. Danach werden die abisolierten Enden der Teil-Biegungen 46 der beiden Teil-Drahtelemente 42 durch Schweißen miteinander verbunden, wobei insgesamt eine Biegung 48 hergestellt wird, die die beiden Teil-Drahtelemente 42 bzw. deren Schenkel 44 und je nach Definition auch deren Teil-Biegungen 46 verbindet, wobei diese Biegung 48 eine Spitze 50 aufweist, an der ein Temperatursensor 52 angeordnet wird, der weiterhin über eine Leitung 54 mit einem Steuergerät und/oder Messgerät verbunden werden kann. Abisolierte Enden der miteinander verschweißten Teil-Drahtelemente 42 und der daran befestigte Temperatursensor 52 können danach mit Isoliermaterial abisoliert werden.

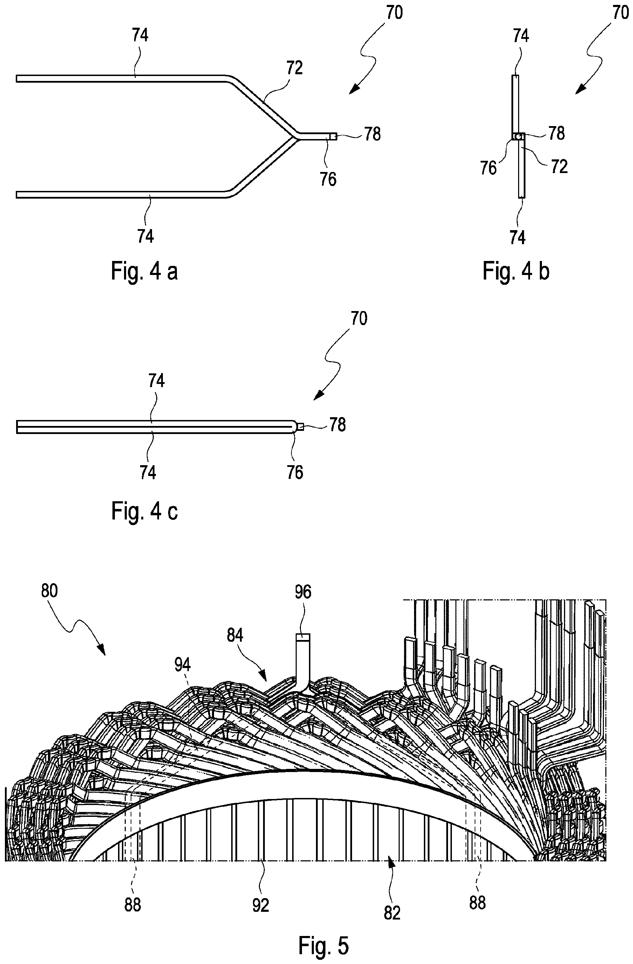

Das vierte Beispiel des Drahtelements 70 zum Durchführen der vierten Ausführungsform des erfindungsgemäßen Verfahrens ist in Figur 4a von oben in Draufsicht, in Figur 4b von vorne in Vorderansicht und in Figur 4c von der Seite in Seitenansicht jeweils schematisch dargestellt. Dabei wird dieses Drahtelement 70, ähnlich wie im Fall des zweiten Beispiels des Drahtelements 20 aus Figur 2, aus einem Abschnitt aus Draht hergestellt, wobei dieser Abschnitt des Drahts ebenfalls gebogen wird, wobei hier ebenfalls eine Biegung 72 bereitgestellt wird, über die zwei Schenkel 74 miteinander verbunden sind bzw. werden, die im Rahmen üblicher Fertigungstoleranzen zueinander weitgehend parallel angeordnet sind bzw. werden. In diesem Fall wird die Biegung 72 des Drahtelements 70 zusätzlich verformt, wobei an einem Ende der Biegung 72 eine Spitze 76 für die Biegung bzw. für das Drahtelement bereitgestellt wird. Sobald bzw. nachdem Schenkel 74 dieses Drahtelements 70 und Schenkel weiterer Drahtelemente in Nuten eines Blechpakets angeordnet worden sind, wird zumindest an der Spitze 76 dieses Drahtelements, die außerhalb der Nuten verbleibt bzw. angeordnet wird, ein Temperatursensor 78 befestigt.

Figur 5 zeigt in schematischer Darstellung das Detail des erfindungsgemäßen Bauteils 80 für eine Elektromaschine, das durch eine fünfte Ausführungsform des erfindungsgemäßen Verfahrens hergestellt worden ist, das ein Blechpaket 82 und eine Vielzahl an Drahtelementen 84, 86 aufweist, wobei hier nur einem Drahtelement 84 eine Bezugsziffer zugeordnet ist. Das Blechpaket 82 weist mehrere Nuten 92 und eine zentrale Achse auf. Außerdem weist jedes Drahtelement 84 zwei Schenkel 88 aus Draht auf, die über eine Biegung 94 aus Draht miteinander verbunden sind. Dabei sind zumindest die Schenkel 88 der Drahtelemente 84 parallel zu der Achse in den Nuten 92 angeordnet, wobei an der Biegung 94 mindestens eines Drahtelements 84 ein Temperatursensor 96 befestigt ist.

### BEZUGSZEICHEN:

- 2: Drahtelement
- 4: Schenkel
- 6: Biegung
- 8: Korb
- 10: Blechpaket
- 12: Nut
- 14: Bauteil
- 16: Temperatursensor
- 20: Drahtelement
- 22: Schenkel
- 24: Biegung
- 26: Temperatursensor
- 40: Drahtelement
- 42: Teil-Drahtelement
- 44: Schenkel
- 46: Teil-Biegung
- 48: Biegung
- 50: Spitze
- 52: Temperatursensor
- 54: Leitung
- 70: Drahtelement
- 72: Biegung
- 74: Schenkel
- 76: Spitze
- 78: Temperatursensor
- 80: Bauteil
- 82: Blechpaket
- 84: Drahtelement
- 88: Schenkel
- 92: Nut
- 94: Biegung
- 96: Temperatursensor

## Patentansprüche

1. Verfahren zum Herstellen eines Bauteils (14, 80) für eine Elektromaschine aus einem Blechpaket (10, 82), das mehrere Nuten (12, 92) und eine zentrale Achse aufweist, und einer Vielzahl an Drahtelementen (2, 20, 40, 70, 84), wobei jedes Drahtelement (2, 20, 40, 70, 84) zwei Schenkel (4, 22, 44, 74, 88) aus Draht aufweist, die über eine Biegung (6, 24, 48, 72, 94) aus Draht miteinander verbunden sind oder werden, wobei zumindest die Schenkel (4, 22, 44, 74, 88) der Drahtelemente (2, 20, 40, 70, 84) parallel zu der Achse in den Nuten (12, 92) angeordnet werden, wobei die Biegungen (6, 24, 48, 72, 94) der Drahtelemente (2, 20, 40, 70, 84) in mehreren ringförmigen Lagen relativ zu der Achse des Blechpakets (10, 82) angeordnet werden, wobei eine Biegung (6, 24, 48, 72, 94) aus jeweils einer Lage einen lageabhängigen Abstand zu der Achse des Blechpakets (10, 82) aufweist, wobei eine Biegung (48, 72, 94) des mindestens einen Drahtelements (40, 70, 84) zusätzlich derart verformt wird, dass eine Spitze (50,76) herstellt wird, wobei diese Biegung (48, 72, 94) von außen zugänglich ist,
**dadurch gekennzeichnet, dass** die eine Biegung (48, 72, 94) des mindestens einen Drahtelements (2, 20, 40, 70, 84), die zum Befestigen des Temperatursensors (16, 52, 78, 96) vorgesehen wird, in einer mittleren Lage angeordnet wird, die im Vergleich zu sämtlichen Biegungen (6, 24, 48, 72, 94) sämtlicher Drahtelemente (2, 20, 40, 70, 84) zu der Achse des Blechpakets (10, 82) einen mittleren Abstand aufweist, wobei anschließend an der Spitze (50, 57) der von außen zugänglichen Biegung (48, 72, 94) des mindestens einen Drahtelements (2, 20, 40, 70, 84) ein Temperatursensor (16, 52, 78, 96) montiert und befestigt wird.

2. Verfahren nach Anspruch 1, bei dem zumindest ein Drahtelement (2, 20, 40) aus einem Abschnitt Draht hergestellt wird, der gebogen wird, wobei die Biegung (6, 24, 72, 94) und die beiden Schenkel (4, 22, 74, 88) gebildet werden.

3. Verfahren nach Anspruch 1, bei dem zumindest ein Drahtelement (40) aus zwei Teil-Drahtelementen (42) hergestellt wird, die miteinander verbunden werden, wobei die Biegung (48) durch Verbinden der zwei Teil-Drahtelemente (42) aus Draht gebildet wird.

4. Verfahren nach Anspruch 3, bei dem der Temperatursensor bei einem Verbinden der zwei Teil-Drahtelemente (42) zu dem zumindest einen Drahtelement (40) in das zumindest eine Drahtelement (40) eingebunden wird.

5. Verfahren nach einem der voranstehenden Ansprüche, bei dem die Schenkel (4, 22, 44, 74, 88) des mindestens einen Drahtelements (2, 20, 40, 70, 84) zuerst in mindestens einer Nut (12, 92) angeordnet werden, wobei der Temperatursensor (16, 26, 52, 78, 96) danach an der Biegung (6, 24, 48, 72, 94) des mindestens einen Drahtelements (2, 20, 40, 70, 84) befestigt wird.

6. Verfahren nach einem der voranstehenden Ansprüche, bei dem der mindestens eine Temperatursensor (16, 26, 52, 78, 96) an einem Wickelkopf für das Bauteil (14, 80) der Elektromaschine angeordnet wird.

7. Bauteil für eine Elektromaschine, das ein Blechpaket (10, 82) und eine Vielzahl an Drahtelementen (2, 20, 40, 70, 84) aufweist, wobei das Blechpaket (10, 82) mehrere Nuten (12, 92) und eine zentrale Achse aufweist, wobei jedes Drahtelement (2, 20, 40, 70, 84) zwei Schenkel (4, 22, 44, 74, 88) aus Draht aufweist, die über eine Biegung (6, 24, 48, 72, 94) aus Draht miteinander verbunden sind oder werden, wobei zumindest die Schenkel (4, 22, 44, 74, 88) der Drahtelemente (2, 20, 40, 70, 84) parallel zu der Achse in den Nuten (12, 92) angeordnet sind, wobei die Biegungen (6, 24, 48, 72, 94) der Drahtelemente (2, 20, 40, 70, 84) in mehreren ringförmigen Lagen relativ zu der Achse des Blechpakets (10, 82) angeordnet werden, wobei eine Biegung (6, 24, 48, 72, 94) aus jeweils einer Lage einen lageabhängigen Abstand zu der Achse des Blechpakets (10, 82) aufweist, wobei eine Biegung (48, 72, 94) des mindestens einen Drahtelements (40, 70, 84) zusätzlich derart verformt wird, dass eine Spitze (50,76) herstellt wird, wobei diese Biegung (48, 72, 94) von außen zugänglich ist,
**dadurch gekennzeichnet, dass** die eine Biegung (48, 72, 94) des mindestens einen Drahtelements (2, 20, 40, 70, 84), die zum Befestigen des Temperatursensors (16, 52, 78, 96) vorgesehen wird, in einer mittleren Lage angeordnet wird, die im Vergleich zu sämtlichen Biegungen (6, 24, 48, 72, 94) sämtlicher Drahtelemente (2, 20, 40, 70, 84) zu der Achse des Blechpakets (10, 82) einen mittleren Abstand aufweist, und dass anschließend an der Spitze (50, 76) der von außen zugänglichen Biegung (48, 72, 94) des mindestens einen Drahtelements (2, 20, 40, 70, 84) ein Temperatursensor (16, 52, 78, 96) montiert und befestigt ist

8. Bauteil nach Anspruch 7, das als Stator ausgebildet ist.

9. Bauteil nach Anspruch 7 oder 8, bei dem zumindest ein Drahtelement (2, 20, 40, 70, 84) einen viereckigen Querschnitt aufweist.

## Claims

1. Method for manufacturing a component (14, 80) for an electric machine from a laminated core (10, 82), which has a plurality of grooves (12, 92) and a central axis, and a plurality of wire elements (2, 20, 40, 70, 84), wherein each wire element (2, 20, 40, 70, 84) has two legs (4, 22, 44, 74, 88) of wire, which are connected to one another by a bend (6, 24, 48, 72, 94) of wire, wherein at least the legs (4, 22, 44, 74, 88) of the wire elements (2, 20, 40, 70, 84) are arranged parallel to the axis in the grooves (12, 92), wherein the bends (6, 24, 48, 72, 94) of the wire elements (2, 20, 40, 70, 84) are arranged in a plurality of annular layers relative to the axis of the laminated core (10, 82), wherein one bend (6, 24, 48, 72, 94) from one respective layer has a layer-dependent distance from the axis of the laminated core (10, 82), wherein one bend (48, 72, 94) of the at least one wire element (40, 70, 84) is additionally deformed such that a tip (50, 76) is produced, wherein this bend (48, 72, 94) is accessible from the outside,
**characterized in that** the one bend (48, 72, 94) of the at least one wire element (2, 20, 40, 70, 84), which is provided for securing the temperature sensor (16, 52, 78, 96), is arranged in a middle layer, which compared to all of the bends (6, 24, 48, 72, 94) of all wire elements (2, 20, 40, 70, 84) has a middle distance from the axis of the laminated core (10, 82), wherein afterwards a temperature sensor (16, 52, 78, 96) is mounted and secured to the tip (50, 57) of the externally accessible bend (48, 72, 94) of the at least one wire element (2, 20, 40, 70, 84).

2. Method according to claim 1, wherein at least one wire element (2, 20, 40) is produced from a section of wire which is bent, wherein the bend (6, 24, 72, 94) and the two legs (4, 22, 74, 88) are formed.

3. Method according to claim 1, wherein at least one wire element (40) is produced from two part wire elements (42), which are connected to one another, wherein the bend (48) is formed by joining the two part wire elements (42) of wire.

4. Method according to claim 3, wherein the temperature sensor is incorporated into the at least one wire element (40) when the two part wire elements (42) are connected to form the at least one wire element (40).

5. Method according to any one of the preceding claims, wherein the legs (4, 22, 44, 74, 88) of the at least one wire element (2, 20, 40, 70, 84) are firstly arranged in at least one groove (12, 92), wherein the temperature sensor (16, 26, 52, 78, 96) is then secured to the bend (6, 24, 48, 72, 94) of the at least one wire element (2, 20, 40, 70, 84).

6. Method according to any one of the preceding claims, wherein the at least one temperature sensor (16, 26, 52, 78, 96) is arranged on a winding head for the component (14, 80) of the electric machine.

7. Component for an electric machine, which comprises a laminated core (10, 82) and a plurality of wire elements (2, 20, 40, 70, 84), wherein the laminated core (10, 82) has a plurality of grooves (12, 92) and a central axis, wherein each wire element (2, 20, 40, 70, 84) has two legs (4, 22, 44, 74, 88) of wire, which are connected to one another by a bend (6, 24, 48, 72, 94) of wire, wherein at least the legs (4, 22, 44, 74, 88) of the wire elements (2, 20, 40, 70, 84) are arranged parallel to the axis in the grooves (12, 92), wherein the bends (6, 24, 48, 72, 94) of the wire elements (2, 20, 40, 70, 84) are arranged in a plurality of annular layers relative to the axis of the laminated core (10, 82), wherein one bend (6, 24, 48, 72, 94) from one respective layer has a layer-dependent distance from the axis of the laminated core (10, 82), wherein one bend (48, 72, 94) of the at least one wire element (40, 70, 84) is additionally deformed such that a tip (50, 76) is produced, wherein this bend (48, 72, 94) is accessible from the outside.
**characterized in that** the one bend (48, 72, 94) of the at least one wire element (2, 20, 40, 70, 84), which is provided for securing the temperature sensor (16, 52, 78, 96), is arranged in a middle layer, which compared to all of the bends (6, 24, 48, 72, 94) of all wire elements (2, 20, 40, 70, 84) has a middle distance from the axis of the laminated core (10, 82), and **in that** afterwards a temperature sensor (16, 52, 78, 96) is mounted and secured to the tip (50, 76) of the externally accessible bend (48, 72, 94) of the at least one wire element (2, 20, 40, 70, 84).

8. Component according to claim 7, which is configured as a stator.

9. Component according to claim 7 or 8, wherein at least one wire element (2, 20, 40, 70, 84) has a quadrangular cross-section.

## Revendications

1. Procédé de fabrication d'un composant (14, 80) pour une machine électrique à partir d'un paquet de tôles (10, 82) qui présente plusieurs rainures (12, 92) et un axe central, et une pluralité d'éléments de fil (2, 20, 40, 70, 84), dans lequel chaque élément de fil (2, 20, 40, 70, 84) présente deux branches (4, 22, 44, 74, 88) en fil qui sont reliées l'une à l'autre par le biais d'une courbure (6, 24, 48, 72, 94) en fil, dans lequel au moins les branches (4, 22, 44, 74, 88) des éléments de fil (2, 20, 40, 70, 84) sont agencées parallèlement à l'axe dans les rainures (12, 92), dans lequel les courbures (6, 24, 48, 72, 94) des éléments de fil (2, 20, 40, 70, 84) sont agencées dans plusieurs couches annulaires par rapport à l'axe du paquet de tôles (10, 82), dans lequel une courbure (6, 24, 48, 72, 94) présente une distance dépendant de la couche par rapport à l'axe du paquet de tôles (10, 82) à partir respectivement d'une couche, dans lequel une courbure (48, 72, 94) de l'au moins un élément de fil (40, 70, 84) est en outre déformée de telle manière qu'une pointe (50, 76) soit fabriquée, dans lequel cette courbure (48, 72, 94) est accessible depuis l'extérieur,
**caractérisé en ce que** la une courbure (48, 72, 94) de l'au moins un élément de fil (2, 20, 40, 70, 84) qui est prévue pour la fixation du capteur de température (16, 52, 78, 96), est agencée dans une couche intermédiaire qui présente par rapport à toutes les courbures (6, 24, 48, 72, 94) de tous les éléments de fil (2, 20, 40, 70, 84) une distance moyenne par rapport à l'axe du paquet de tôles (10, 82), dans lequel un capteur de température (16, 52, 78, 96) est monté et fixé ensuite au niveau de la pointe (50, 57) de la courbure (48, 72, 94) accessible depuis l'extérieur de l'au moins un élément de fil (2, 20, 70, 84).

2. Procédé selon la revendication 1, pour lequel au moins un élément de fil (2, 20, 40) est fabriqué à partir d'une section de fil qui est pliée, dans lequel la courbure (6, 24, 72, 94) et les deux branches (4, 22, 74, 88) sont formées.

3. Procédé selon la revendication 1, pour lequel au moins un élément de fil (40) est fabriqué à partir de deux éléments de fil partiels (42) qui sont reliés l'un à l'autre, dans lequel la courbure (48) est formée en reliant les deux éléments de fil partiels (42) en fil.

4. Procédé selon la revendication 3, pour lequel le capteur de température est intégré dans l'au moins un élément de fil (40) lorsque les deux éléments de fil partiels (42) sont reliés à l'au moins un élément de fil (40).

5. Procédé selon l'une quelconque des revendications précédentes, pour lequel les branches (4, 22, 44, 74, 88) de l'au moins un élément de fil (2, 20, 40, 70, 84) sont tout d'abord agencées dans au moins une rainure (12, 92), dans lequel le capteur de température (16, 26, 52, 78, 96) est ensuite fixé à la courbure (6, 24, 48, 72, 94) de l'au moins un élément de fil (2, 20, 40, 70, 84).

6. Procédé selon l'une quelconque des revendications précédentes, pour lequel l'au moins un capteur de température (16, 26, 52, 78, 96) est agencé au niveau d'une tête d'enroulement pour le composant (14, 80) de la machine électrique.

7. Composant pour une machine électrique qui présente un paquet de tôles (10, 82) et une pluralité d'éléments de fils (2, 20, 40, 70, 84), dans lequel le paquet de tôles (10, 82) présente plusieurs rainures (12, 92) et un axe central, dans lequel chaque élément de fil (2, 20, 40, 70, 84) présente deux branches (4, 22, 44, 74, 88) en fil qui sont reliées l'une à l'autre par le biais d'une courbure (6, 24, 48, 72, 94) en fil, dans lequel au moins les branches (4, 22, 44, 74, 88) des éléments de fil (2, 20, 40, 70, 84) sont agencées parallèlement à l'axe dans les rainures (12, 92), dans lequel les courbures (6, 24, 48, 72, 94) des éléments de fil (2, 20, 40, 70, 84) sont agencées dans plusieurs couches annulaires par rapport à l'axe du paquet de tôles (10, 82), dans lequel une courbure (6, 24, 48, 72, 94) à partir respectivement d'une couche présente une distance dépendant de la couche par rapport à l'axe du paquet de tôles (10, 82), dans lequel une courbure (48, 72, 94) de l'au moins un élément de fil (40, 70, 84) est en outre déformée de telle manière qu'une pointe (50, 76) soit fabriquée, dans lequel cette courbure (48, 72, 94) est accessible depuis l'extérieur,
**caractérisé en ce que** la une courbure (48, 72, 94) du au moins un élément de fil (2, 20, 40, 70, 84) qui est prévue pour la fixation du capteur de température (16, 52, 78, 96), est agencée dans une couche intermédiaire qui, comparée à toutes les courbures (6, 24, 48, 72, 94) de tous les éléments de fil (2, 20, 40, 70, 84), présente une distance moyenne par rapport à l'axe du paquet de tôles (10, 82), et **en ce qu'**un capteur de température (16, 52, 78, 96) est ensuite monté et fixé au niveau de la pointe (50, 76) de la courbure (48, 72, 94) accessible depuis l'extérieur de l'au moins un élément de fil (2, 20, 70, 84).

8. Composant selon la revendication 7 qui est réalisé comme stator.

9. Composant selon la revendication 7 ou 8, pour lequel au moins un élément de fil (2, 20, 40, 70, 84) présente une section transversale carrée.
